# EUROPEAN PATENT APPLICATION

(11) **EP 4 379 917 A1**
(43) Date of publication of application: **05.06.2024**
(21) Application number: 23168044.8
(22) Date of filing: 14.04.2023
(51) Int. Cl.: H01M 50/172, H01M 50/102, H01M 50/507, H01M 50/547, H01M 50/552, H01M 50/514, H01M 50/103, H01M 50/553

(54) **BATTERY AND BATTERY APPARATUS**

(30) Priority: 01.12.2022 CN 202211533025
(71) Applicant: CALB Group Co., Ltd., Changzhou City, Jiangsu Province (CN)
(72) Inventor: XU, Jiuling, Changzhou City, Jiangsu Province (CN); ZHANG, Lulu, Changzhou City, Jiangsu Province (CN)
(74) Representative: Becker, Eberhard

(57) **Abstract**

The invention relates to the technical field of batteries and provides a battery and a battery apparatus. The battery includes a battery casing and a pole component. The pole component is disposed on a first surface of the battery casing, at least part of the pole component is located on an outer side of the battery casing, and a part of an orthographic projection of the pole component toward a plane where the first surface is at is located outside a range where the first surface is at, so that an electrical connection between a busbar and the pole component can be facilitated, and the difficulty of connecting the busbar and the pole component can be reduced, thereby improving the grouping efficiency of the battery, so as to improve the usage performance of the battery.

## Description

### BACKGROUND

### Technical Field

The disclosure relates to the technical field of batteries, and in particular to a battery and a battery apparatus.

### Description of Related Art

In the related art, when batteries are grouped, the batteries may be connected through a busbar. Due to the limitation of the configuration position of the pole component, the connection of the busbar is relatively complicated.

### SUMMARY

The disclosure provides a battery and a battery apparatus to improve the usage performance of the battery.

According to a first aspect of the disclosure, there is provided a battery, including a battery casing and a pole component. The pole component is disposed on a first surface of the battery casing, at least part of the pole component is located on an outer side of the battery casing, and a part of an orthographic projection of the pole component toward a plane where the first surface is at is located outside a range where the first surface is at.

The battery in the embodiment of the disclosure includes the battery casing and the pole component, the pole component is disposed on the first surface of the battery casing, the at least part of the pole component is located on the outer side of the battery casing, and the part of the orthographic projection of the pole component toward the plane where the first surface is at is located outside the range where the first surface is at, so that an electrical connection between a busbar and the pole component can be facilitated, and the difficulty of connecting the busbar and the pole component can be reduced, thereby improving the grouping efficiency of the battery, so as to improve the usage performance of the battery.

According to a second aspect of the disclosure, there is provided a battery apparatus, including the battery.

The battery apparatus in the embodiment of the disclosure includes the battery, the battery includes the battery casing and the pole component, the pole component is disposed on the first surface of the battery casing, the at least part of the pole component is located on the outer side of the battery casing, and the part of the orthographic projection of the pole component toward the plane where the first surface is at is located outside the range where the first surface is at, so that an electrical connection between a busbar and the pole component can be facilitated, and the difficulty of connecting the busbar and the pole component can be reduced, thereby improving the grouping efficiency of the battery, so as to improve the usage performance of the battery apparatus.

### BRIEF DESCRIPTION OF THE DRAWINGS

For a better understanding of the disclosure, reference may be made to the embodiments shown in the following drawings. Parts in the drawings are not necessarily drawn to scale, and related elements may be omitted in order to emphasize and clearly illustrate the technical features of the disclosure. In addition, relevant elements or parts may have different configurations as known in the art. Furthermore, in the drawings, the same reference numerals refer to the same or similar parts in the drawings.
FIG. 1 is a schematic view of a structure of a battery apparatus according to an exemplary embodiment.
FIG. 2 is a schematic view of a structure of a battery from a viewing angle according to an exemplary embodiment.
FIG. 3 is a schematic view of a structure of a battery from another viewing angle according to an exemplary embodiment.
FIG. 4 is a schematic view of an exploded structure of a battery according to an exemplary embodiment.

### DETAILED DESCRIPTION OF DISCLOSED EMBODIMENTS

The technical solutions in the exemplary embodiments of the disclosure will be clearly and completely described below with reference to the drawings in the exemplary embodiments of the disclosure. The exemplary embodiments described herein are for illustrative purposes only and are not intended to limit the protection scope of the disclosure, so it should be understood that various modifications and changes may be made to the exemplary embodiments without departing from the protection scope of the disclosure.

In the description of the disclosure, unless otherwise expressly specified and limited, the terms "first" and "second" are only used for the purpose of description and should not be construed as indicating or implying relative importance; the term "multiple" means two or more; and the term "and/or" includes any combination and all combinations of one or more associated listed items. In particular, reference to "the/the aforementioned" object or "an" object is intended to mean one of multiple possible such objects.

Unless otherwise specified or stated, terms such as "connection" and "fixation" should be understood in a broad sense. For example, "connection" may be a fixed connection, a detachable connection, an integral connection, an electrical connection, or a signal connection; and "connection" may be a direct connection or an indirect connection through an intermediate medium. For persons skilled in the art, the specific meanings of the above terms in the disclosure may be understood according to specific situations.

Further, in the description of the disclosure, it should be understood that directional terms such as "on", "under", "inside", and "outside" described in the exemplary embodiments of the disclosure are described from the perspectives shown in the drawings and should not be construed as limiting the exemplary embodiments of the disclosure. It should also be understood that in the context, when an element or a feature is referred to as being connected "on", "under", "inside", or "outside" another element(s), the same can not only be directly connected "on", "under", "inside", or "outside" the other element(s), but also be indirectly connected "on", "under", "inside", or "outside" the other element(s) through an intermediate element.

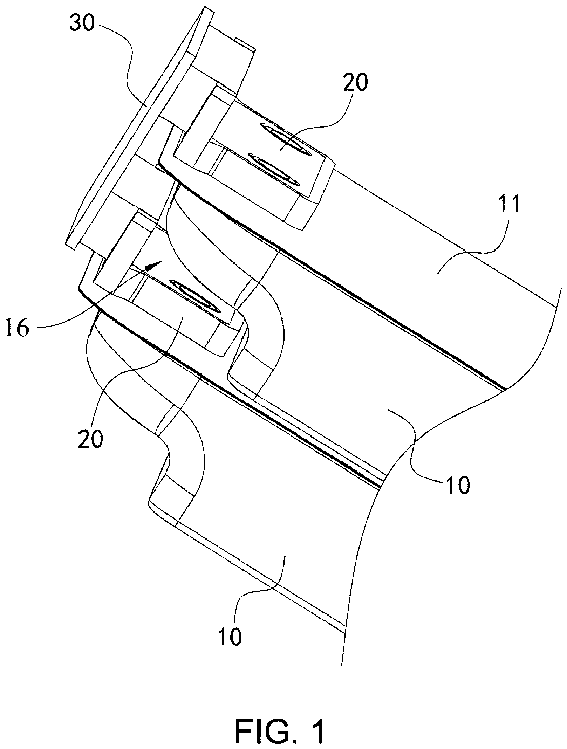

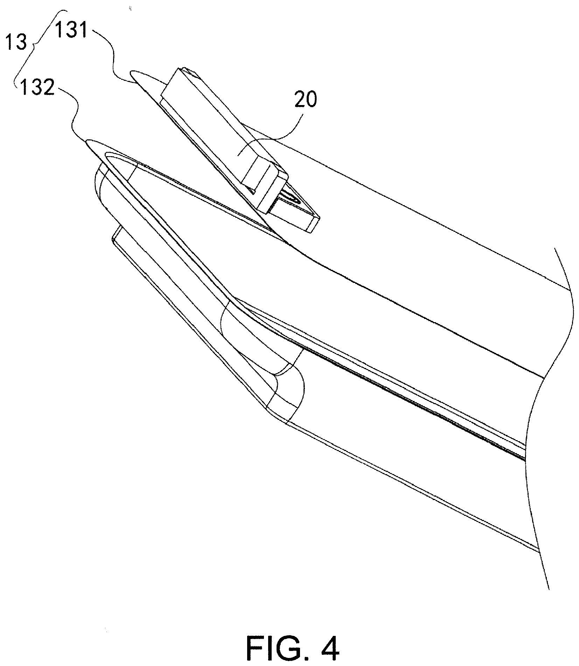

An embodiment of the disclosure provides a battery. Please refer to FIG. 1 and FIG. 4. The battery includes a battery casing 10 and a pole component 20. The pole component 20 is disposed on a first surface 11 of the battery casing 10, at least part of the pole component 20 is located on an outer side of the battery casing 10, and a part of an orthographic projection of the pole component 20 toward a plane where the first surface 11 is at is located outside a range where the first surface 11 is at.

The battery in the embodiment of the disclosure includes the battery casing 10 and the pole component 20, the pole component 20 is disposed on the first surface 11 of the battery casing 10, the at least part of the pole component 20 is located on the outer side of the battery casing 10, and the part of the orthographic projection of the pole component 20 toward the plane where the first surface 11 is at is located outside the range where the first surface 11 is at, so that an electrical connection between a busbar and the pole component 20 can be facilitated, and the difficulty of connecting the busbar and the pole component 20 can be reduced, thereby improving the grouping efficiency of the battery, so as to improve the usage performance of the battery.

It should be noted that when grouping the batteries, two adjacent batteries may be connected through the busbar. The part of the orthographic projection of the pole component 20 toward the plane where the first surface 11 is at is located outside the range where the first surface 11 is at, that is, the pole component 20 may be disposed protruding to a circumferential outer edge of the battery casing 10. Therefore, when connecting the busbar and the pole component 20, the busbar may not extend into a circumferential inner edge of the battery casing 10 for connection, so that the connection between the busbar and the pole component 20 is facilitated, thereby improving the connection efficiency between the busbar and the pole component 20.

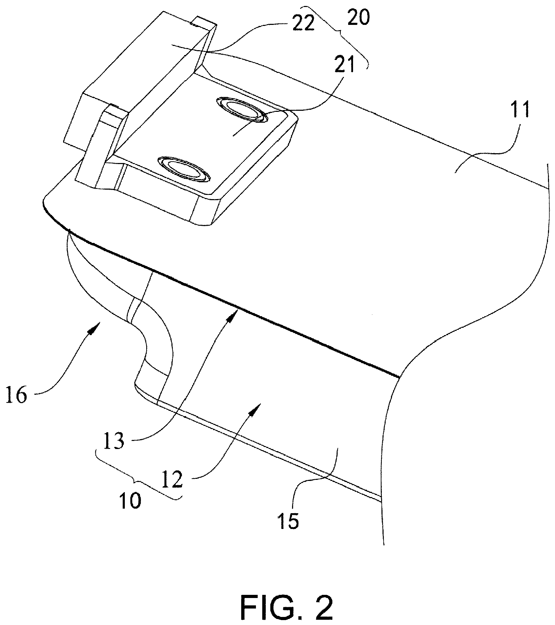

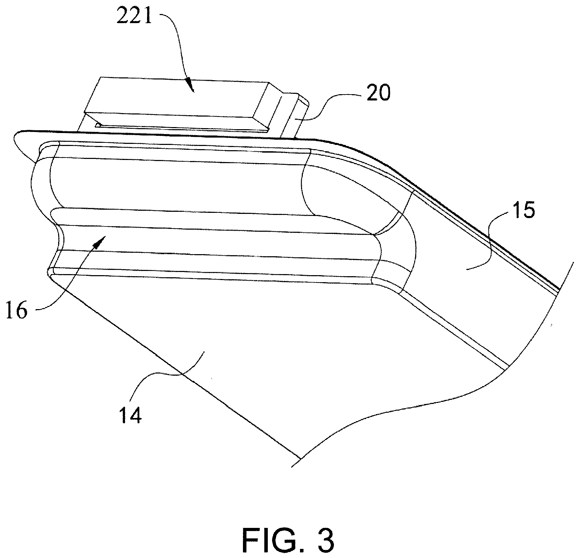

In an embodiment, as shown in FIG. 2 and FIG. 3, the first surface 11 is a large surface of the battery casing 10, the battery casing 10 may also include a second surface 14, the first surface 11 and the second surface 14 are oppositely disposed, and the first surface 11 and the second surface 14 are both large surfaces of the battery casing 10. At this time, the area of the first surface 11 may be equal to the area of the second surface 14 or the area of the first surface 11 may be greater than the area of the second surface 14, but the difference between the two areas is not too large. During the process of using the battery, the large surface may generate the most heat. Correspondingly, the area of the first surface 11 may be smaller than the area of the second surface 14, but the difference between the two areas is not too large. However, the areas of the first surface 11 and the second surface 14 are both greater than the areas of other surfaces of the battery casing 10.

The pole component 20 is disposed on the large surface of the battery casing 10, which can improve the support performance of the battery casing 10 to the pole component 20, so as to improve the structural strength of the battery.

In an embodiment, as shown in FIG. 2, the battery casing 10 includes a main body 12 and a flange 13. The flange 13 is disposed on a circumferential outer edge of the main body 12, wherein a part of the pole component 20 is disposed beyond a circumferential outer edge of the flange 13, so that the pole component 20 can be disposed beyond the maximum circumferential outer edge of the battery casing 10, thereby facilitating the connection between the busbar and the pole component 20, and fully utilizing the space occupied by the flange 13, so as to improve the space utilization rate of the battery when grouping the batteries.

The circumferential outer edge of the main body 12 is provided with the flange 13. The flange 13 is a part protruding from the main body 12. For example, if the main body 12 is substantially rectangular, the flange 13 is a protruding structure disposed around the rectangular body. The flange 13 may be a structure for connecting the battery casing 10 or the flange 13 may be a structure specially configured for heat dissipation and positioning of the battery. However, due to the presence of the flange 13, the area of at least the circumferential outer edge of the battery becomes larger. Through disposing a part of the pole component 20 beyond the circumferential outer edge of the flange 13, the pole component 20 may fully utilize the space occupied by the flange 13, thereby improving the space utilization rate of the battery itself. Also, when grouping the batteries, since the busbar is used to connect the pole component 20, and the pole component 20 is beyond the circumferential outer edge of the battery, the busbar does not need to extend excessively into an internal space surrounded by the circumferential outer edge of the battery. Therefore, an electrical connection with the busbar can be conveniently formed, thereby improving the grouping efficiency of the battery.

In an embodiment, the main body 12 forms the first surface 11. For example, the flange 13 may be located at a middle position of the main body 12 or the flange 13 may be located on a side of the main body 12. However, the main body 12 and the flange 13 may form another surface, such as the second surface 14. At this time, the area of the second surface 14 may be greater than the area of the first surface 11.

In an embodiment, the main body 12 and the flange 13 jointly form the first surface 11, and a part of the pole component 20 is disposed beyond the circumferential outer edge of the flange 13, so that the pole component 20 may fully utilize the space of the flange 13, which can not only improve the space utilization rate of the battery, but also facilitate an electrical connection between the pole component 20 and the busbar.

In an embodiment, as shown in FIG. 2 and FIG. 3, the main body 12 includes the second surface 14 and four third surfaces 15 disposed around the second surface 14. The second surface 14 is disposed opposite to the first surface 11, wherein the area of the first surface 11 is greater than the area of the second surface 14, and the area of the second surface 14 is greater than the area of the third surface 15, that is, the pole component 20 may be disposed on the largest outer surface of the battery casing 10, thereby improving the support of the battery casing 10 to the pole component 20, so as to ensure the connection strength of the pole component 20, thereby improving the structural strength of the battery.

It should be noted that the two opposite first surface 11 and second surface 14 are large surfaces of the battery casing 10, while the four third surfaces 15 are small surfaces of the battery casing 10. The four third surfaces 15 include two pairs of small surfaces, that is, a first pair of small surfaces extending along the length direction of the battery casing 10 and a second pair of small surfaces extending along the width direction of the battery casing 10, and the area of the first pair of small surfaces is greater than the area of the second pair of small surfaces, but both are smaller than the area of the large surface.

In some embodiments, there are two pole components 20. The two pole components 20 are respectively a positive pole component and a negative pole component. Each pole component 20 may include two poles for increasing the overcurrent capacity of the battery. There are also two tabs of a cell. The two tabs are respectively a positive tab and a negative tab. The positive pole component is connected to the positive tab, and the negative pole component is connected to the negative tab.

It should be noted that the pole component 20 and the battery casing 10 may be insulated. For example, the pole component 20 and the battery casing 10 may be insulated by adopting an insulator or an insulating coating, which is not limited here and may be selected according to actual requirements. In some embodiments, it is not excluded that one pole component 20 may be electrically connected to the battery casing 10.

In an embodiment, as shown in FIG. 2, the pole component 20 includes a connected first portion 21 and second portion 22. The first portion 21 and the second portion 22 are located on the outer side of the battery casing 10, the first portion 21 is located on the first surface 11, the second portion 22 is spaced apart from the first surface 11, and at least part of the second portion 22 is disposed beyond the circumferential outer edge of the flange 13, which can conveniently implement an electrical connection between the busbar and the second portion 22 on the basis of ensuring that there is an insulating gap between the second portion 22 and the battery casing 10.

The first portion 21 may be insulated from the battery casing 10, and the second portion 22 may be electrically connected to the busbar. The first portion 21 may be electrically connected to the second portion 22, and the first portion may be electrically connected to the cell.

In an embodiment, as shown in FIG. 3, a side of the second portion 22 away from the first portion 21 includes a connecting surface 221. The connecting surface 221 is used to connect to the busbar, that is, the connecting surface 221 may be disposed beyond a circumferential outer edge of the first surface 11, so as to conveniently implement an electrical connection between the busbar and the connecting surface 221 to improve the connection efficiency when grouping the batteries.

In an embodiment, the connecting surface 221 is substantially perpendicular to the first surface 11, so that when the busbar is connected to the connecting surface 221, the busbar may be directly docked with the connecting surface 221, thereby facilitating the connection between the busbar and the connecting surface 221, thereby improving the group efficiency of the battery.

It should be noted that the connecting surface 221 is perpendicular to the first surface 11 without considering manufacturing errors and installation errors.

In an embodiment, as shown in FIG. 4, the flange 13 includes two opposite first outer edges 131 and two opposite second outer edges 132. The length of the second outer edge 132 is greater than the length of the first outer edge 131, and a part of the pole assembly 20 is disposed at least beyond one first outer edge 131, so that the busbar can be connected to an end side of the battery, which not only facilitates the connection of the busbar, but also maximizes the utilization of the space of a battery apparatus.

The flange 13 includes two opposite first outer edges 131 and two opposite second outer edges 132. The length of the second outer edge 132 is greater than the length of the first outer edge 131, and a part of the pole component 20 is disposed at least beyond one first outer edge 131, that is, the pole component 20 may be disposed beyond the second pair of small surfaces, that is, the busbar may be disposed opposite to the second pair of small surfaces, so that when grouping the batteries, the busbar can be located at an end part of the battery.

In an embodiment, the thickness of the battery casing 10 is 0.1 mm to 0.5 mm, so that the weight of the battery casing 10 can be reduced, so as to increase the energy density of the battery. The thickness of the battery casing 10 may be 0.1 mm, 0.15 mm, 0.2 mm, 0.25 mm, 0.3 mm, 0.35 mm, 0.4 mm, 0.45 mm, 0.5 mm, etc.

In an embodiment, the material of the battery casing 10 may be stainless steel or aluminum, which has good corrosion resistance and sufficient strength. The battery casing 10 may be approximately rectangular.

In an embodiment, as shown in FIG. 1 to FIG. 3, the battery casing 10 is provided with a recess 16. The pole component 20 is located outside a range where the recess 16 is at, and the recess 16 is used to accommodate the pole component of another battery, so that when grouping the batteries, the pole components may be prevented from occupying a large space, so as to reduce the distance between the batteries, thereby improving the space utilization rate of the battery, so as to increase the energy density of the battery apparatus.

In an embodiment, the recess 16 is disposed on a side of the battery casing 10 away from the pole component 20, wherein an orthographic projection of the recess 16 along a surface of the battery casing 10 provided with the pole component 20 at least partially coincides with the pole component 20, so that when grouping two adjacent batteries, outer edges of the batteries may be substantially flush, and the pole component of another battery may be ensured to be effectively accommodated in the recess 16, so as to improve the grouping efficiency and the space utilization rate of the battery.

In an embodiment, the battery casing 10 is provided with the recess 16. The pole component 20 is located in the recess 16, so that when grouping the batteries, it is not necessary to consider avoiding the pole component 20, so as to quickly implement the grouping of the batteries and ensure the grouping efficiency of the battery to further improve the space utilization rate of the battery apparatus, thereby increasing the volumetric energy density of the battery apparatus.

In an embodiment, the battery further includes the cell. The cell is disposed in the battery casing 10 and is electrically connected to the pole component 20.

The battery includes the cell and an electrolyte, and is the smallest unit capable of performing electrochemical reactions such as charging/discharging. The cell refers to a unit formed by winding or laminating a stack portion. The stack portion includes a first pole piece, a separator, and a second pole piece. When the first pole piece is a positive pole piece, the second pole piece is a negative pole piece. The polarities of the first pole piece and the second pole piece may be interchanged.

The battery is a stacked battery, which is not only convenient for grouping, but also may be processed to obtain a battery with a longer length. Specifically, the cell is a stacked cell. The cell has a first pole piece, a second pole piece electrically opposite to the first pole piece, and a diaphragm piece disposed between the first pole piece and the second pole piece that are stacked on each other, so that multiple pairs of the first pole pieces and the second pole pieces are stacked to form the stacked cell.

Optionally, the battery may be a winding battery, that is, the first pole piece, the second pole piece electrically opposite to the first pole piece, and the diaphragm piece disposed between the first pole piece and the second pole piece are wound to obtain the winding battery.

The battery may be a square battery, that is, the battery may be a quadrangular prism battery. The quadrangular prism battery mainly refers to the shape of a prism, but it is not strictly limited whether each side of the prism must be a straight line in the strict sense. An angle between the sides may not be a right angle and may have an arced transition. In some embodiments, it is not excluded that the battery may be a cylindrical battery.

In an embodiment, the length of the battery is e, 400 mm ≤ e ≤ 2800 mm, the width of the battery is f, the height of the battery is g, 2f ≤ e ≤ 80f, and/or 0.5g ≤ f ≤ 20g.

Further, 80 mm ≤ f ≤ 200 mm and 10 mm ≤ g ≤ 100 mm.

Preferably, 4f ≤ e ≤ 25f and/or 2g ≤ f ≤ 10g.

In the battery in the above embodiment, the ratio of the length to the width of the battery is greater while ensuring sufficient energy density. Further, the ratio of the width to the height of the battery is greater.

In an embodiment, the length of the battery is e, the width of the battery is f, 4f ≤ e ≤ 7f, that is, the ratio of the length to the width of the battery in the embodiment is greater, so as to increase the energy density of the battery and facilitate the subsequent formation of the battery apparatus.

In an embodiment, the height of the battery is g, 3g ≤ f ≤ 7g, and the ratio of the width to the height of the battery is greater, which can also facilitate formation while ensuring sufficient energy density.

Optionally, the length of the battery may be 800 mm to 1800 mm, the width of the battery may be 80 mm to 180 mm, and the height of the battery may be 15 mm to 35 mm.

It should be noted that the length of the battery is the size in the length direction of the battery, the width of the battery is the size in the width direction of the battery, and the height of the battery is the size in the height direction of the battery, that is, the thickness of the battery.

An embodiment of the disclosure also provides a battery apparatus. The battery apparatus includes the battery.

The battery apparatus of the embodiment of the disclosure includes the battery. The battery includes the battery casing 10 and the pole component 20. The pole component 20 is disposed on the first surface 11 of the battery casing 10, at least part of the pole component 20 is located on the outer side of the battery casing 10, and a part of the orthographic projection of the pole component 20 toward the plane where the first surface 11 is at is located outside the range where the first surface 11 is at, so that an electrical connection between the busbar and the pole component 20 can be facilitated, and the difficulty of connecting the busbar and the pole component 20 can be reduced, thereby improving the grouping efficiency of the battery, so as to improve the usage performance of the battery apparatus.

In an embodiment, the battery apparatus is a battery module or a battery pack.

The battery module includes multiple batteries, and the battery module may further include an end plate and a side plate. The end plate and the side plate are used to fix the batteries.

It should be noted that the batteries may be disposed in the box after forming the battery module, and the batteries may be fixed through the end plate and the side plate. The batteries may be directly disposed in the box, that is, there is no need to group the batteries. At this time, the end plate and the side plate may be removed.

In an embodiment, as shown in FIG. 1, the battery apparatus includes at least two batteries, and the battery apparatus further includes a busbar 30. The busbar 30 connects the at least two batteries, so as to implement series or parallel connection between the batteries.

The pole component 20 is disposed at an end part of the battery casing 10, the busbar 30 may connect two adj acent batteries, and the busbar 30 is located at an end side of the battery casing 10, thereby implementing an electrical connection between the busbar 30 and the pole component 20.

In an embodiment, the busbar 30 is substantially perpendicular to the first surface 11, that is, the busbar 30 may be directly docked with the connecting surface 221 of the pole component 20, thereby improving the connection efficiency between the pole component 20 and the busbar 30, thereby further improving the connection strength between the busbar 30 and the pole component 20.

In an embodiment, the busbar 30 is a flat plate, which not only has a simple structure, but also facilitates the connection with the pole component 20. After all, the connecting surface 221 of the pole component 20 is disposed beyond the first surface 11.

The busbar 30 and the pole component 20 may be welded.

It should be noted that adjacent batteries of the battery apparatus are disposed such that the large surface is opposite to the large surface, and the recess 16 and the pole component 20 are both disposed on the large surface of the battery, so the space utilization rate of the battery apparatus can be improved.

Other implementation solutions of the disclosure will readily occur to persons skilled in the art upon consideration of the specification and practice of the invention disclosed herein. The disclosure is intended to cover any variations, uses, or adaptations of the invention, and the variations, uses, or adaptations follow the general principles of the disclosure and include common knowledge or conventional technical means in the art not disclosed by the disclosure. The specification and the exemplary embodiments are to be regarded as exemplary only, and the true scope and spirit of the disclosure are indicated by the appended claims.

It is to be understood that the disclosure is not limited to the precise structures described above and illustrated in the drawings, and that various modifications and changes may be made without departing from the scope thereof. The protection scope of the disclosure is limited only by the appended claims.

## Claims

1. A battery, comprising:
a battery casing (10);
a pole component (20), wherein the pole component (20) is disposed on a first surface (11) of the battery casing (10), at least part of the pole component (20) is located on an outer side of the battery casing (10), and a part of an orthographic projection of the pole component (20) toward a plane where the first surface (11) is at is located outside a range where the first surface (11) is at.

2. The battery according to claim 1, wherein the battery casing (10) comprises a main body (12) and a flange (13), and the flange (13) is disposed on a circumferential outer edge of the main body (12),
wherein a part of the pole component (20) is disposed beyond a circumferential outer edge of the flange (13).

3. The battery according to claim 2, wherein the main body (12) and the flange (13) jointly form the first surface (11).

4. The battery according to claim 2, wherein the pole component (20) comprises a connected first portion (21) and second portion (22), the first portion (21) and the second portion (22) are located on the outer side of the battery casing (10), the first portion (21) is located on the first surface (11), the second portion (22) is spaced apart from the first surface (11), and at least part of the second portion (22) is disposed beyond the circumferential outer edge of the flange (13).

5. The battery according to claim 4, wherein a side of the second portion (22) away from the first portion (21) comprises a connecting surface (221), and the connecting surface (221) is used to connect to a busbar,
wherein the connecting surface (221) is substantially perpendicular to the first surface (11).

6. The battery according to claim 2, wherein the flange (13) comprises two opposite first outer edges (131) and two opposite second outer edges (132), a length of the second outer edge (132) is greater than a length of the first outer edge (131), and a part of the pole component (20) is disposed beyond one of the first outer edges (131).

7. The battery according to claim 1, wherein the battery casing (10) comprises a second surface (14) and four third surfaces (15) disposed around the second surface (14), and the second surface (14) is disposed opposite to the first surface (11),
wherein an area of the first surface (11) is greater than an area of the second surface (14), and the area of the second surface (14) is greater than an area of the third surface (15).

8. The battery according to any one of claims 1 to 7, wherein the battery casing (10) is provided with a recess (16),
wherein the pole component (20) is located outside a range where the recess (16) is at, and the recess (16) is used to accommodate a pole component (20) of another battery; or
the pole component (20) is located in the recess (16).

9. The battery according to any one of claims 1 to 7, wherein the first surface (11) is a large surface of the battery casing (10).

10. A battery apparatus, comprising the battery according to any one of claims 1 to 9.

11. The battery apparatus according to claim 10, wherein the battery apparatus comprises at least two of the batteries, the battery apparatus further comprises a busbar (30), and the busbar (30) connects the at least two of the batteries,
wherein the busbar (30) is substantially perpendicular to the first surface (11).

12. The battery apparatus according to claim 11, wherein the busbar (30) is a flat plate.
